# EUROPEAN PATENT SPECIFICATION

(11) **EP 1 064 332 B1**
(45) Date of publication and mention of the grant of the patent: **04.06.2003**
(21) Application number: 99910475.5
(22) Date of filing: 18.03.1999
(51) Int. Cl.: C09D 1/02

(54) **TREATMENT OF METALS**
BEHANDLUNG VON METALLEN
TRAITEMENT DE METAUX

(30) Priority: 18.03.1998 GB 9805686
(43) Date of publication of application: 03.01.2001
(73) Proprietor: Kodak Polychrome Graphics Company Ltd., Norwalk, Connecticut 06851 (US)
(72) Inventor: BLUM, Peter, Michael, Cheshire WA14 2AB (GB)
(74) Representative: Brierley, Anthony Paul
(86) International application number: GB9900724
(87) International publication number: WO99047610

(56) References cited:
- EP-A- 0 295 834
- WO-A-97/19819
- DE-C- 3 942 025
- FR-A- 2 353 624
- GB-A- 2 290 989

## Description

This invention relates to the treatment of metals and particularly, although not exclusively, relates to the passivation (or corrosion prevention) of metals. Preferred embodiments relate to the passivation of aluminium.

Aluminium is used in a large number of industries. For example, in architecture, aluminium is used for panels and window and door profiles; in the automotive industry, aluminium is used for body panels and wheels; in the aerospace industry, aluminium is used in aeroplane components; and, in general industry, aluminium cans and containers are used for corrosive goods and aluminium parts are used in shower cubicles, outboard motors, indoor shop equipment, garden articles and so on.

One widely used aluminium passivation treatment utilises chromium-VI (chromate) compounds. Such compounds have many advantages; however, the production, transport, storage and application of highly toxic chromates pose an actual as well as long term risk. More problematic, however, is the safe and environmentally acceptable disposal of chromium-containing waste. As a result of the aforesaid, governments have lowered exposure limits and tightened controls making the use of chromates more expensive and, therefore, less favoured. Consequently, there has been much research into chromium-free pretreatments of aluminium surfaces.

There are a number of approaches to aluminium passivation: firstly, by anodizing aluminium; secondly, using inorganic molecules (especially titanium and zirconium compounds) that react with an oxidized aluminium surface to form mixed oxides; thirdly, using metal ions (e.g. cerium, manganese and cobalt ions in higher oxidation states) that are able to oxidize a metal surface during service life - like Cr(VI) - when the coating system has been destroyed locally and the bare metal is exposed; fourthly, using organic polymers with a high complexing capacity for aluminium surfaces to block active surface centres and to cover the surface with a thin organic coating; and, fifthly, using inorganic film-forming oxides like molybdates, vanadates and silicates which cover the metal surface and also improve paint adhesion.

Another problem that often needs to be addressed when passivating aluminium (or other metals) is to provide a keying surface which has properties which enable other layers, for example lacquers or paints, to be applied over it. Additionally, it is desirable to provide a surface which is flexible and scratch/abrasion resistant.

It is an object of the present invention to address problems associated with the passivation of metals, especially aluminium and/or the provision of metals with other desirable properties.

The invention is based on the surprising discovery that a hydrophilic layer of a lithographic printing plate prepared as described in Applicant's PCT Patent Publication No W097/19819 and optionally treated as described in Applicant's PCT Application No PCT/GB97/03128 provides an excellent means of passivating aluminium (and other metals) and providing other desirable properties.

According to a first aspect of the present invention, there is provided a method of passivating (or preventing the corrosion of) a non-lithographic metallic member, the method comprising contacting a said member with a liquid comprising a silicate and particulate material to form a first layer over said member.

The term "non-lithographic" excludes the passivation of a metallic member which is a substrate for a planographic printing member.

Preferably, said non-lithographic metallic member passes the following test:

**Test A** - BSI 7479:1991(ISO 9227:1990) as described with reference to Examples 11 to 20 hereinafter. A pass may be regarded as the passivated member having slight or, preferably, substantially no, pitting.

Said first layer of said member is preferably substantially scratch resistant. Advantageously, the first layer of said member provides a good keying surface, for example for organic materials.

The method suitably involves formation of a passivating (or corrosion preventing) layer on a surface of said member.

Said liquid applied in the method comprises a silicate liquid, i.e. a silicate solution, in which said particulate material is dispersed. Thus, preferably, said silicate is not present in the form of a gel or colloid.

Said silicate liquid may comprise any soluble silicate including compounds often referred to as water glasses, metasilicates, orthosilicates and sesquisilicates. Said silicate liquid may comprise a modified silicate for example a borosilicate or phosphosilicate. Preferably, said silicate is not a modified silicate. Preferably, said silicate is not substituted with organic functional group.

Said silicate liquid may comprise one or more, preferably only one, metal or non-metal silicate. A metal silicate may be an alkali metal silicate. A non-metal silicate may be quaternary ammonium silicate.

Said silicate liquid may be formed from silicate wherein the ratio of the number of moles of Si species, for example SiO₂, to the number of moles of cationic, for example metal species is in the range 0.25 to 10, suitably in the range 0.25 to about 6, preferably in the range 0.5 to 4 more preferably in the range 2 to 4, especially in the range 3 to 3.5.

Said silicate liquid is preferably alkali metal silicate. In this case, the ratio of the number of moles of SiO₂ to the number of moles of M₂O in said silicate, where M represents an alkali metal may be at least 0.25, suitably at least 0.5, preferably at least 1, more preferably at least 1.5. Especially preferred is the case wherein said ratio is at least 2.5. Said ratio may be less than 6, preferably less than 5 and more preferably less than 4.

Preferred alkali metal silicates include lithium, sodium and potassium silicates. Of these, potassium silicate is least preferred; lithium and/or sodium silicate are more preferred and sodium silicate is especially preferred. A silicate liquid comprising sodium silicate as the only silicate is most preferred. Such a liquid has been found to be especially advantageous for use as a binder in said first layer.

Said liquid used to contact said member may comprise 2 to 30 wt% of metal or non-metal silicate solids (e.g. dissolved sodium silicate solids), preferably 5 to 20 wt%, more preferably 8 to 16 wt%. The liquid may be prepared using 10 to 60 wt%, preferably 30 to 50 wt%, more preferably 35 to 45 wt% of a silicate solution which comprises 30 to 40 wt% of metal or non-metal silicate solids (e.g. dissolved sodium silicate solids).

Said liquid used to contact said member may include 5 to 60 wt% of particulate material. Preferably, the liquid includes 10 to 50 wt%, more preferably 15 to 45 wt%, especially 20 to 40 wt% of particulate material.

The ratio of the weight of SiO₂ solids (and/or the weight of metal or non-metal silicate solids) to the weight of particulate material in the first layer is found to significantly affect the properties of the first layer. If, for example, the ratio of the weight of SiO₂ solids to particulate material is too high, the first layer tends to delaminate from said member; whereas if the ratio is too low, the first layer lacks integrity and tends to be brittle.

The ratio of the weight of SiO₂ solids to the weight of particulate material in said liquid may be in the range 0.18 to 0.42, suitably 0.2 to 0.4, preferably 0.23 to 0.37, more preferably 0.25 to 0.34, especially 0.28 to 0.32.

The ratio of the weight of metal or non-metal silicate solids to the weight of particulate material in the liquid may be in the range 0.1 to 2, suitably in the range 0.1 to 1, preferably in the range 0.1 to 0.7, more preferably in the range 0.2 to 0.6, especially in the range 0.3 to 0.5.

Said liquid may include more than 20 wt%, preferably more than 30 wt%, more preferably more than 40 wt%, especially more than 45 wt% water (including water included in said silicate liquid). Said liquid may include less than 80 wt%, preferably less than 70 wt%, more preferably less than 65 wt%, especially less than about 60 wt% water.

Said particulate material may be organic or inorganic. Organic particulate materials may be provided by latexes. Inorganic particulate materials may be selected from alumina, silica, silicon carbide, zinc sulphide, zirconia, barium sulphate, talcs, clays (e.g. kaolin), lithopone, titanium oxide (or other pigments), mica, quartz, chlorite and calcium carbonate. Said particulate material is preferably inorganic.

Said particulate material may comprise a first material which may have a hardness of greater than 8 Modified Mohs (on a scale of 0 to 15), preferably greater than 9 and, more preferably, greater than 10 Modified Mohs.

Said first material may comprise generally spherical particles. Alternatively, said material may comprise flattened particles or platelets.

When we refer to particle sizes hereinafter, we refer to the volume mean, unless otherwise stated. Mean particle sizes referred to herein suitably refer to primary particle sizes.

Said first material preferably comprises an inorganic material. Said first material is preferably selected from alumina, and chlorite. Said first material preferably comprises alumina which term includes Al₂O₃ and hydrates thereof, for example Al₂O₃.3H₂O. Preferably, said material is Al₂O₃.

The ratio of the weight of said first particulate material to the weight of SiO₂ solids may be at least 0.4, preferably at least 0.5, more preferably at least 0.6, especially at least 0.7. The ratio may be less than 2, preferably less than 1.8, more preferably less than 1.7, especially 1.6 or less.

Said particulate material in said liquid may include at least 20 wt%, preferably at least 30 wt% and, more preferably, at least 40 wt% of said first material. Said liquid may include 5 to 40 wt%, preferably 5 to 30 wt%, more preferably 7 to 25 wt%, especially 10 to 20 wt% of said first material.

Said first material preferably does not chemically react with another component in said liquid. Said first material preferably does not chemically react on or after contact with said member. Thus, said first material is preferably chemically inert under the conditions at which it is used in said method.

Said first material is not silica and/or a derivative thereof.

Said particulate material may comprise a second material.

One of either said first or second material may have a mean particle size of at least 0.1 µm and preferably at least 0.5 µm; and, suitably, a mean particle size of less than 20 µm, more preferably less than 10 µm. Suitably, the particle size distribution for 95% of particles of said one material may be in the range 0.01 to 150 µm, preferably in the range 0.05 to 75 µm, more preferably in the range 0.05 to 30 µm.

The other of either said first or second material may have a mean particle size of at least 0.001 µm, preferably at least 0.01 µm; and, suitably, a mean particle size of less than 5 µm and, more preferably, less than 1 µm.

Said particulate material in said liquid may include at least 20 wt%, preferably at least 30 wt% and, more preferably, at least 40 wt% of said second material. Said liquid may include 5 to 40 wt%, preferably 5 to 30 wt%, more preferably 7 to 25 wt%, especially 10 to 20 wt% of said second material.

Said second material preferably comprises an inorganic material. Said second material may be selected from pigments, for example titanium dioxide, carbonates, for example calcium carbonate and metal silicates, for example aluminium silicate.

Where said second material is a pigment, the colour of the pigment may be selected in dependence upon the desired colour of said passivating layer.

Said second material preferably does not chemically react with another component in said liquid. Said second material preferably does not chemically react on or after contact with said member. Thus, said second material is preferably chemically inert at the conditions under which it is used in said method.

Said second material is preferably not silica and/or a derivative thereof.

Said second material preferably has a different morphology compared to that of said first material. The mean particle size of said second material is different compared to that of said first material. The mean particle size of either said first or second material is suitably at least 200 wt%, preferably at least 300 wt%, more preferably at least 400 wt%, especially at least 500% bigger than the mean particle size of the other one of said first or second material.

Said first and second materials (and, optionally, together with other particulate materials provided in said liquid) preferably define a multimodal, for example a bimodal, particle size distribution.

Where the liquid comprises a silicate and said particulate material comprises a first material and a second material as described, the ratio of the wt% of metal or non-metal silicate (e.g. dissolved sodium silicate solid) to the wt% of said first material may be in the range 0.25 to 4, preferably in the range 0.5 to 1.5 and more preferably about 1. Similarly, the ratio of the wt% of metal or non-metal silicate to the wt% of said second material may be in the range 0.25 to 4, preferably in the range 0.5 to 1.5 and more preferably about 1. The ratio of the wt% of first material to the wt% of second material may be in the range 0.5 to 2, preferably in the range 0.75 to 1.5, more preferably about 1 to 1.

Other particulate materials may be provided in addition to said first and/or second materials. Other particulate materials may have the physical properties described herein and may be provided in amounts as described herein for said first and/or second particulate materials. Such other particulate materials may be of any type described herein for said particulate material or said first or second materials described herein. Preferably, said liquid does not include more than 5 wt%, preferably not more than 2 wt%, more preferably not more than 0.5 wt%, especially no, added particulate silica. Preferably, no particulate material in said liquid chemically reacts with another component in said liquid. Preferably, no particulate material chemically reacts on or after contact with said member. Thus, each particulate material is preferably chemically inert under the conditions at which it is used in said method.

Preferably, said particulate material includes material having angular and/or jagged edges. The material is preferably substantially amorphous. At least 5 wt%, suitably 10 wt%, preferably 20 wt%, more preferably 30 wt%, especially 40 wt% of the total particulate material may be of this type. Said particulate material may include substantially regularly shaped, e.g. spherical material. At least 5 wt%, suitably 10 wt%, preferably 20 wt%, more preferably 30 wt%, especially 40 wt% of the total particulate material may be of this type.

The pH of said liquid may be greater than 9.0, is preferably greater than 9.5 and, more preferably, is greater than 10.0. Especially preferred is the case wherein the pH is greater than 10.5. The pH is suitably controlled so that the silicate remains in solution and does not form a gel. A gel is generally formed when the pH of a silicate solution falls below pH9. The pH of said liquid is preferably less than 14, more preferably less than 13. It is understood that the pH of. the liquid affects the adhesion of the first layer on the surface of said member. It is found that the use of a liquid having a pH as described can lead to good adhesion.

The liquid may include other compounds for adjusting its properties. For example, the liquid may include one or more surfactants. Said liquid may include 0 to 1 wt% of surfactant(s). A suitable class of surfactants comprises anionic sulphates or sulphonates. The liquid may include viscosity builders for adjusting the viscosity of the liquid. Said liquid may include 0 to 10 wt%, preferably 0 to 5 wt% of viscosity builder(s). Also, the liquid may include dispersants for dispersing the inorganic particulate material throughout the liquid. Said liquid may include 0 to 2 wt% of dispersant(s). A suitable dispersant may be sodium hexametaphosphate.

Said liquid suitably includes less than 10 wt%, preferably less than 5 wt%, more preferably less than 1 wt% of a protic acid (preferably any acidic species). Preferably, said liquid includes no protic acid (preferably no acidic species). In the context of this specification an acidic specie is one having a pH of less than 5 when one mole of the substance is dissolved or dispersed in water.

Said liquid suitably includes less than 10 wt%, preferably less than 5 wt%, more preferably less than 1 wt%, especially substantially no, dissolved solids, other than metal or non-metal silicate solids as described herein.

Said liquid may have a viscosity of less than 100 mPas (centipoise) when measured at 20°C and a shear rate of 200s⁻¹ using a Mettler Rheomat 180 Viscometer incorporating a double gap measuring geometry. Preferably, said viscosity is less than 50mPa (centipoise), more preferably less than 30mPas (centipoise) when measured as aforesaid. Especially preferred is the case wherein the viscosity is less than 20 mPas (centipoise).

The ratio of the total amount of solid material (e.g. metal or non-metal silicate solids and particulate materials) to the amount of solvent (e.g. water) in said liquid may be at least 0.25, suitably at least 0.35, preferably at least 0.5, more preferably at least 0.6, especially at least 0.7. Said ratio may be less than 1.5, suitably less than 1.4, preferably less than 1.2, more preferably less than 1.1, especially 1 or less.

The total amount of solid material in said liquid may be at least 20 wt%, suitably at least 30 wt%, preferably at least 35 wt%, more preferably at least 40 wt%, especially at least 42 wt%. Said total amount of solid material may be less than 65 wt%, suitably less than 60 wt%, preferably less than 55 wt%, more preferably less than 53 wt%, especially less than 51 wt%.

Said liquid suitably includes less than 5 wt%, preferably less than 4 wt%, more preferably less than 2 wt%, especially substantially no organic solvents.

The thickness of said first layer can affect the properties thereof and, in particular, whether the layer can pass, for example, Test A referred to above. The thickness (or coat weight) can be adjusted to optimize the properties of said first layer.

Said liquid may be applied to a said member to form a first layer having an average thickness after drying of less than 50 µm, suitably less than 30 µm, preferably less than 20 µm. In some cases, the thickness may be less than 10 µm or even less than 8 µm.

The thickness of the first layer may be greater than 0.1 µm, suitably greater then 0.5 µm, preferably greater than 1.0 µm, more preferably greater than 1.5 µm, especially greater than 2 µm.

The method preferably includes the step of providing suitable conditions for the removal of water from the liquid after it has been applied to the member. Suitable conditions may involve passive or active removal of water and may comprise causing an air flow over the member and/or adjusting the humidity of air surrounding the member. The member may be placed in an environment, for example a heated environment, so that its temperature does not exceed 230°C, preferably does not exceed 200°C and, more preferably, does not exceed 175°C. Especially preferred is the case wherein the member temperature does not exceed 150°C. It is found to be advantageous to arrange the member in an environment wherein the temperature is less than 230°C as described since, at this temperature, annealing of the member is not significant and, therefore, the tensile strength of the member is maintained at an acceptable level. In some situations, the member may, advantageously, simply be subjected to ambient conditions for the removal of water.

Where the member is arranged in a heated environment, it may be arranged therein for less than 180 seconds, preferably less than 120 seconds and, more preferably, less than 100 seconds.

Said member may comprise any metal or alloy. It has been found that said first layer can advantageously be provided over aluminium, titanium or zinc members (or alloys of any of the aforesaid) or stainless steel members. It may also be possible to apply the method to magnesium members. Preferably, however, said member is aluminium or an alloy thereof. Preferably, said member comprises a major amount of aluminium, wherein a major amount, in the context of this specification, suitably comprises at least 80 wt%, preferably at least 90 wt%, more preferably at least 95 wt% and especially at least 99 wt%.

Advantageously, said aluminium member need not be anodized prior to passivation.

In the method, said metallic member may be pretreated prior to contact with said liquid by one or more conventional methods used in the surface treatment of metals, for example caustic etch cleaning, acid cleaning, brush graining, mechanical graining, slurry graining, sand blasting, abrasive cleaning, electrocleaning, solvent degreasing, ultrasonic cleaning, alkali non-etch cleaning, primer coating, grit/shot blasting and electrograining. Details of such methods when used on aluminium are provided in: "The surface treatment and finishing of aluminium and its alloys" S. Wernick, R. Pinner and P. G. Sheasby published by Finishing Publication Ltd., ASM International, 5th edition 1987.

Where the member is pretreated, preferred pretreatments are those which involve adjusting the character of the surface of the member, for example those involving cleaning, graining or the like. If a surface coating is, however, applied on the surface of the member, the coating is preferably applied as a liquid.

Preferably, the metallic member is cleaned and/or etched prior to being contacted with said liquid. Cleaning and/or etching may be achieved using an alkaline liquid, for example sodium hydroxide, optionally with additives such as sodium gluconate and/or sorbitol.

The member may also be subjected to a desmutting treatment, suitably using nitric acid. After this treatment, the member should be rinsed and/or dried prior to being contacted with said liquid. Suitably, there is no intermediate layer or layers of a thickness greater than 5 µm, preferably greater than 2 µm, more preferably greater than 1 µm, between the metallic member and said first layer. Preferably, said metallic member is directly contacted with said liquid, thereby to prepare said first layer.

In some cases, where relatively thick passivating layers are required to be applied over said member, a second layer may be provided over said first layer by contacting said first layer with a liquid comprising a silicate and particulate material. Said liquid used to prepare said second layer may be independently as described in any statement herein when referring to the liquid used to prepare said first layer. Said liquid for preparation of said second layer preferably comprises the same components, preferably in the same amounts, as provided in said liquid used in the preparation of said first layer. Said second layer may have any feature of said first layer described herein. Preferably, the method does not involve any intermediate treatment, for example chemical treatment, of said first layer prior to contact with said liquid for forming said second layer. All that may suitably be required is for the first layer to be surface dried, for example by being exposed to ambient conditions for 15 minutes.

The first and second layers together may have a coat weight of at least 10 g/m², preferably at least 12 g/m². The coat weight may be less than 200 g/m², suitably less than 100 g/m², preferably less than 90 g/m², more preferably less than 80 g/m², especially less than 70 g/m².

The first and second layers together may have an average thickness of less than 50 µm, suitably less than 40 µm, preferably less than 35 µm, especially less than 30 µm. Said thickness may be greater than 0.1 µm, suitably greater than 2 µm, preferably greater than 5 µm, more preferably greater than 10 µm, especially greater than 15 µm.

Advantageously, it is found that the member need not be treated any further, for example it need not be treated with a protic acid and/or any acidic specie, after provision of said first layer and said optional second layer.

However, in some situations, for example where it is desired to augment or adjust the form of protection provided for said member, the method may include the further step of contacting said first layer (or said second layer if provided) with a modifying means, suitably for adjusting the pH of the surface of said layer. A thus treated member may pass the following tests:

**Test 1** - the passivated metallic member is exposed to steam of a boiling kettle for 2 minutes, followed by wiping with cotton wool and assessing whether there is any weight loss as a result of removal of said first layer (and/or said second layer if provided). The member passes the test if less than 5 wt%, preferably less than 2 wt%, more preferably less than 1 wt%, especially approximately 0.4 wt% of said first layer (and/or said second layer if provided) is removed by the treatment.

**Test 2** - the passivated metallic member is immersed in a stripping solution comprising potassium dichromate dihydrate (215g) and orthophosphoric acid (280 ml; s.g. 1.84) at 90°C for 10 minutes. The member is removed and rinsed and then wiped with cotton wool and an assessment made as to whether there is any weight loss as a result of removal of said first layer (and/or said second layer if provided). The member passes the test if less than 5 wt%, preferably less than 2 wt%, more preferably less than 1 wt%, especially approximately 0.4 wt% of said first layer (and/or said second layer if provided) is removed by the treatment.

Said modifying means is preferably applied at ambient temperature or above, more preferably in the range 20°C to 90°C, especially 20°C to 60°C.

Preferably, said modifying means is arranged to lower the pH of at least the outermost surface of the first layer (or second layer if provided), so that its pH after application of said modifying means is less than its pH before application. Preferably, the pH (before application) of the liquid comprising silicate and particulate material is greater than the pH (before application) of the modifying means. The pH of the modifying means may be less than 10.0, preferably less than 9.0, more preferably less than 8.0. Especially preferred is the case wherein the pH is about 7 or below. In the most preferred embodiments, the pH is less than 5.0. The pH may be above 1, preferably above 2 and more preferably above 3.

Preferably, said modifying means includes water as a solvent. Preferably, said modifying means comprises an aqueous solution or dispersion. Preferably, said modifying means includes one or more components selected from acids, buffer formulations, colloidal suspensions and salts. More preferably, said modifying means includes one or more components selected from buffer formulations, colloidal suspensions and salts, with salts being especially preferred.

Preferred acids are protic acids and include phosphoric acid, sulphuric acid, hydrochloric acid, nitric acid, acetic acid, citric acid, sodium hydrogen carbonate and boric acid, with boric acid being especially preferred.

Preferred buffer formulations include formulations including citric acid and/or a monohydrogen phosphate and/or a dihydrogen phosphate and/or boric acid in combination with, for example a strong acid and/or an alkali. Especially preferred buffer formulations include a phosphate.

Preferred colloidal suspensions include insoluble oxides and/or hydroxides, preferably of Group III or IV elements, with silica and aluminium hydroxide being especially preferred.

Cations of salts may be selected from group I, II and III, metals and transition metals, especially, first row transition metals. Preferred salts have cations selected from sodium, potassium, magnesium, calcium, aluminium, titanium, manganese, iron, copper and zinc.

Anions of salts may be selected from sulphate, monohydrogenphosphate, dihydrogen phosphate, orthophosphate, polyvinylphosphonate, acetate, citrate, aluminate, chloride, propionate and nitrate.

Preferred salts include aluminium sulphate, sodium dihydrogen phosphate, sodium sulphate, sodium citrate, calcium monohydrogenphosphate, aluminium nitrate, aluminium chloride, titanium III sulphate, iron III nitrate, iron III sulphate, iron II sulphate, iron III phosphate, copper II sulphate, copper nitrate, zinc II sulphate, zinc phosphate and manganese phosphate.

Especially preferred salts include aluminium sulphate, aluminium nitrate, iron III nitrate, iron III sulphate, iron II sulphate, copper II sulphate, copper nitrate and zinc II sulphate.

The most preferred salt is aluminium sulphate.

Where said modifying means comprises a solution or dispersion, the concentration of the solute or dispersant may be at least 2 wt%, suitably at least 3 wt%, preferably at least 4 wt% and more preferably, at least 5 wt%. The concentration of the solute or dispersant may be less than 50 wt%, preferably less than 40 wt% and, more preferably, less than 30 wt%.

Preferred modifying means are believed to form a deposit or precipitate over said first layer (or said second layer if provided) which may act as a barrier to the passage of alkaline material from the layer below. Such a precipitate is preferably essentially insoluble in water. In some cases, the modifying means applied may be capable of chemically reacting with the layer it contacts to produce an insoluble precipitate. For example, when aluminium sulphate is used, insoluble aluminium hydroxide may be formed. In other cases, however, the modifying means may act by washing off material from the layer it contacts.

Said modifying means may be applied by any suitable means, for example by dipping, spraying or roller coating.

It is found that modifying means can be selected which enable said first layer (or said second layer if provided) to be stained by suitable dyes. This may provide one way of colouring said first layer (or said second layer if provided). Another way is to use different coloured pigments or dyes in the liquid applied. Other modifying means can be selected which reduce or prevent staining.

In the event that there is a further treatment after application of said first layer or said optional second layer, such further treatment preferably does not involve treatment with a fluid comprising a silicate and dispersed particulate material, for example a liquid as described in any statement herein.

Advantageously, the entire passivation of said member can be carried out at a temperature of less than 260°C, suitably less than 230°C, preferably less than 200°C, more preferably less than 150°C, especially less than 100°C.

Said metallic member treated in the method may have any end application where passivated metal is required. For example, said member may be an architectural member such as a panel or profile; an automotive member such as a body panel; an aerospace member or the like; or any member described in the introduction of this specification. The passivated metallic member may be coated with another layer of material, for example a lacquer.

One advantage of the use of a first layer (and optional second layer) as described is that the repair of damage may be relatively easy. For example, a damaged area may be contacted with a said liquid as described above (even whilst in situ, for example if the member is a car body panel) and then dried by suitable means, for example using a hot air dryer (or the like). It will be appreciated that since the liquid is aqueous, no hazardous organic solvents need be used, with obvious advantages.

According to a second aspect of the invention, there is provided a non-lithographic metallic member preparable by a method according to said first aspect.

According to a third aspect of the invention, there is provided the use of a liquid comprising silicate and particulate material in the preparation of a passivating (or corrosion-preventing) first layer on a surface of a non-lithographic metallic member.

It has been found that a material prepared as described herein includes a passivating layer which adheres well to the underlying member. This is believed to be due to the formation of chemical bonds between the metallic member, especially when the member is aluminium, and silicate. For example alumino-silicate bonds may be formed.

According to a fourth aspect of the invention, there is provided a passivated non-lithographic metallic member comprising a metal which is provided with a first layer comprising a binder material derived or derivable from a liquid comprising a silicate and particulate material.

It is believed that said binder material derived from a liquid and comprising a silicate contains silicate polymer ions which are caused to condense on removal of water to form -Si-O-Si- moieties. Accordingly, in another aspect, the invention provides a passivated non-lithographic metallic member which includes a first layer which includes a binder material comprising a polymeric structure which includes -Si-O-Si- moieties in which particulate material is arranged.

Preferably, 30 to 80 wt%, more preferably 40 to 70 wt%, of said first layer is composed of said particulate material.

Said particulate material may include at least 20 wt%, preferably at least 30 wt%, more preferably, at least 40 wt% of a said first material as described herein.

Said particulate material on said substrate may include at least 20 wt%, preferably at least 30 wt%, more preferably at least 40 wt% of a said second material as described herein.

In the first layer, the ratio of the wt% of first material to the wt% of second material may be in the range 0.5 to 2, preferably in the range 0.75 to 1.5, more preferably, about 1 to 1.

Said first layer preferably has an average thickness of less than 100 µm, suitably less than 60 µm, preferably less than 40 µm, more preferably less than 30 µm, especially less than 20 µm.

Said first layer may have an average thickness of greater than 0.1 µm, suitably greater than 0.5 µm, preferably greater than 1.0 µm, more preferably greater than 1.5 µm, especially greater than 2 µm.

A second layer which includes a binder material and particulate material as described may be provided over said first layer.

Said first layer (or said optional second layer, if provided) may have an Ra, measured using a stylus measuring instrument (a Hommelmeter T2000) with an LV-50 measuring head, of at least 0.1 µm, suitably at least 0.2 µm, preferably at least 0.3 µm, more preferably at least 0.4 µm. Said Ra may be 3 µm or less, suitably 2 µm or less, preferably 1.5 µm or less.

Said first layer (or said first and second layer together) may include at least 1 g/m², suitably at least 3 g/m², preferably at least 5 g/m², more preferably at least 10 g/m², especially at least 12 g/m² of material.

Said first layer (or said first and second layer together) may include less than 200 g/m², suitably less than 100 g/m², preferably less than 90 g/m², more preferably less than 80 g/m², especially less than 70 g/m².

The ratios of the weight of SiO₂ solid: particulate material; the weight of metal or non-metal silicate solids: particulate material; the weight of said first particulate material: SiO₂ solid; the weight of metal or non-metal silicate solids: said first and/or second particulate materials; thicknesses and coat weights described according to said first aspect may be applied to the invention according to said fourth aspect.

Any feature of any aspect of any invention or embodiment described herein may be combined with any feature of any aspect of any other invention or embodiment described herein.

The invention will now be described by way of example.

### Preparation of treated aluminium.

### Example 1

### Step 1

### Preparation of Aluminium

A 0.3 mm gauge aluminium alloy sheet of designation AA1050 was cut to a size of 210 mm by 300 mm. The sheet was then immersed face up in a solution of sodium hydroxide dissolved in distilled water (100g/l) at ambient temperature for 60 seconds and thoroughly rinsed with water.

### Step 2

### Preparation of coating formulation

The following reagents were used in the preparation:
- Sodium silicate solution having a ratio SiO₂ : Na₂O in the range 3.17 to 3.45 (average about 3.3); a composition of 27.1 - 28.1 wt% SiO₂, 8.4 - 8.8 wt% Na₂O, with the balance being water; and a density of about 75 Twaddel (°Tw) , equivalent to 39.5 Baumé (°Bé) and a specific gravity of 1.375.
- Deionised water having a resistivity of 5 Mohm.cm
- Al₂O₃ powder comprising alumina (99.6%) in the shape of hexagonal platelets. The mean particle size is 3 µm. The powder has a hardness of 9 Moh (on a 0 - 10 hardness scale).
- Rutile titanium dioxide provided with an inorganic coating of Al₂O₃, ZnO and ZnPO₄. The mean crystal size is 0.23 µm.

Deionised water (48g; 24 wt%) and sodium silicate solution (80 g; 40 wt%) were added to a 250ml beaker and the solution sheared using a Silverson high shear mixer operating at maximum speed. Titanium dioxide powder (36g; 18 wt%) was then added in portions of approximately 2g every ten seconds. On completion of the addition, the liquid was sheared for a further two minutes. Then, alumina powder (36g; 18 wt%) was added in portions of approximately 2g every ten seconds. On completion of the addition, the liquid was sheared for a further two minutes. The viscosity of the liquid was found to be about 10 centipoise when measured at 20°C and a shear rate of 200s⁻¹ using a Mettler Rheomat 180 Viscometer incorporating a double gap measuring geometry.

### Step 3

### Application of coating formulation

The coating formulation prepared in Step 2 was coated onto the aluminium sheet prepared in Step 1 using a rotating Meyer bar coater (designation K303) to give a 6 µm wet film thickness.

### Step 4

### Drying the formulation

The coated sheet prepared in Step 3 was placed in an oven at 130° for 80 seconds. The plate was then removed from the oven and allowed to cool to ambient temperature.

### Step 5

### Post-drying treatment

The dried sheet prepared in Step 4 was immersed in aluminium sulphate (0.1M) for thirty seconds. The sheet was then spray rinsed for about twenty seconds using tap water and fan dried.

### Example 2

The procedure of Example 1 was generally followed except that a different coating formulation was used in step 2. The formulation was prepared by adding the following components to deionized water (40wt%) in the order given. After each addition, the formulation was subjected to high shear mixing.

| COMPONENT | WT% |
|---|---|
| Hombitan LW (Trade Mark) -anatase TiO₂ (mean primary particle size of 0.2 µm) | 14.2 |
| Microgrit C3 (Trade Mark) for alumina powder (mean primary particle size of 3 µm) | 14.2 |
| Sodium silicate solution as in Eg.1. | 31.2 |

### Example 3

The procedure of Example 2 was followed except that the following components were mixed in step 2 in the order given below.

| COMPONENT | WT% |
|---|---|
| Deionized water. | 21.51 |
| Hombitan LW (Trade Mark) as in Eg. 2. | 14.15 |
| Alumina powder as in Eg. 2. | 14.15 |
| Sodium polysilicate solution - having a SiO₂ : Na₂O ratio of 5.2 : 1 and containing 22.78% solid. | 50.19 |

### Example 4

The procedure of Example 2 was followed by mixing the following components in step 2 in the order given below.

| COMPONENT | WT% |
|---|---|
| Deionized water. | 33.29 |
| Hombitan LW (Trade Mark) as in Eg. 2. | 11.83 |
| Alumina powder as in Eg. 2. | 11.83 |
| Bindzil 15/500 (Trade Mark) a colloidal silica having average on particle size of 7 nm | 1.1 |
| Sodium polysilicate as in Eg. 3. | 41.95 |

### Example 5

The procedure of Example 2 was followed by mixing the following components in step 2 in the order given below.

| COMPONENT | WT% |
|---|---|
| Deionized water. | 40 |
| Hombitan LW as in Eg. 2. | 14.23 |
| Alumina powder as in Eg. 2. | 13.23 |
| Fabutit 748 (Trade Mark) - aluminium phosphate | 1.0 |
| Sodium silicate as per Example 1. | 31.5 |

### Example 6 to 8

The procedure of example 1 was followed except that aluminium was replaced with Stainless Steel annealed AlS1304 foil (Example 6), titanium (99.7% pure) (Example 7) and zinc (99.9% pure) (Example 8). The coating formulation appeared to adhere well to each of the metals.

### Example 9

### Testing the Coatings

### Test 1

This involved exposing 10 cm by 10 cm samples of the sheets prepared in the examples to steam of a boiling kettle for 2 minutes, followed by wiping with cotton wool and assessing whether there was a weight loss due to removal of the coating formulation.

### Test 2

A stripping solution was prepared consisting of potassium dichromate dihydrate (215g) and orthophosphoric acid (280ml; s.g. 1.84). Then 10 cm by 10 cm sample of the sheets prepared in the examples were immersed in boiling stripping solution (at about 90°C) for a minimum of 10 minutes. Samples were removed, rinsed and wiped using cotton wool before assessing whether there was a weight loss due to removal of the coating formulation.

### Test 3 (Evaluating Scratch Resistance)

A relatively large aluminium plate was placed on a bench top and taped to the bench along opposing parallel sides. A. smaller sample of a sheet to be tested was inserted between the large plate and the bench, with the coated side face upwards and thereby in contact with the aluminium of the large plate. A 1 Kg weight was placed on top of the large plate so that it was arranged over the sample. Then the sample was dragged, by hand, from between the bench and large plate.

The removed sample was visually assessed for markings on its coated surface; for any coating removed as a fine powder, assessed by wiping the surface with a white tissue and inspecting the tissue; and for any scratches where the underlying metal was visible.

### Test 4 (Mechanical Abrasion Test)

A Mechanical Rub Tester produced by Research Equipment (London) Limited was used. The unit has a rubbing head which is arranged to move horizontally up and down a sample at about 40 cycles/minute, the movement being created by a wheel and piston motion.

An 80 mm by 160 mm sample to be tested was placed on the bed of the machine which was fitted with a 6 cm² polypropylene abrasive scouring pad. The rubbing head was counterbalanced and then an additional 200g weight applied. 1 to 2m of a formulation comprising ink solvent, surfactant and fine silica abrasive (0.5 wt%) sold under the Trade Mark TONE-UP by Horsell Graphic Industries was applied to the coated surface of the sample and rubbing commenced. If no wear is observed after 5 minutes then the 200g weight is replaced by a 300g weight and rubbing continued for a further 5 minutes.

In the test, the plate is observed for wear, for example by the metal surface underlying the coating being exposed.

### Test 5 (Keying ability)

A light sensitive material of the quinone diazide/novolak resin type was applied from an organic solvent onto a 10cm x 10cm sample of material prepared in Example 1 to give a dry coating weight of 2 g/m². All but a solid area 50 mm wide was exposed to radiation and developed according to procedures which are standard in the preparation of lithographic printing plates. This resulted in removal of all of the coating other than that in the solid area. The sample was inked in a normal manner and any excess water removed from the sample prior to a test to assess how easily the remaining coating could be rubbed off. In the test, 1 to 2 ml of TONE-UP as described in Test 4 was applied to the centre of the solid inked area. Then, using a small wad of dry cotton wool, the TONE-UP was rubbed hard 50 times across the solid area, where one rub is defined as a movement across the area one way and back, so each point in the area tested is covered 100 times. The TONE-UP was then washed from the sample and a sponge used to apply ink to the solid area. A comparison was made of the ink reception in the solid area and an area immediately adjacent to it.

### Results

**Test 1** : The sample prepared in Example 1 showed no weight loss.

**Test 2** : The sample prepared in Example 1 showed no weight loss.

**Test 3** : The samples prepared in Examples 1 to 5 were found to be substantially scratch resistant in that negligible scratching was visible after the Test.

**Test 4** : The sample of Example 1 was found to show wear after between 5 and 6 minutes of the treatment described.

**Test 5 :** From the comparison made it was found that the solid area was not significantly removed. Additionally, it was noted that the performance of the sample was substantially the same as a sample comprising an electrograined and anodized aluminium support, suggesting that the keying abilities of the two material are similar.

### Example 10

### Preparation of coating formulation

The following reagents were used in the preparation:

Sodium silicate solution as described in Example 1, Step 2.

Alumina CR15 - a spherical, precipitated alumina having a mean particle diameter of 0.45 µm, a hardness of 9 Mohs and a crystal density of 3.98 g/cm³ obtained from Abralap Ltd of England.

Plastorit Naintsch Micro - a mineral three-component product comprising mica, quartz and chlorite (magnesium-aluminium-silicate-hydrate) having a density of 2.75 g/cm³, a hardness of 3-4 Mohs, an average particle size of 6 µm, obtained from Naintsch Mineralwerke Ges m.b.H of Austria.

Durcal 5 - particulate material comprising calcium carbonate (≥ 98 wt%), magnesium carbonate (≤ 2 wt%) and Fe III oxide (≤ 0.05 wt%), having a density of 1.3g/cm³, an average particle diameter of 6µm, wherein 29% of the particles have a diameter of less than 2µm, obtained from Omya GmbH of Germany.

Durcal 2 - as for Durcal 5, except the density is 1.1 g/cm³, the median particle diameter is 3 µm and 40% of the particles have a diameter of less then 2µm.

Kaolin ASPNC2 - hydrous aluminium silicate having an average particle diameter of 1.3µm, and a specific gravity of 2.58 g/cm³, obtained from Engelhard Corporation of New Jersey, U.S.A.

Deionised water (35.50g; 35.5 wt%) and sodium silicate solution (2.50 g; 2.5 wt%) were added together and sheared using a high shear mixer. The following were then added successively with high shear mixing over a suitable time:

| | |
|---|---|
| Alumina CR15 | (9.50 g, 9.5 wt%) |
| Plastorit Naintsch Micro | (4.00 g, 4.0 wt%) |
| Durcal 5 | (8.00 g, 8.0 wt%) |
| Durcal 2 | (4.00 g, 4.0 wt%) |
| Kaolin ASP NC2 | (6.30 g, 6.3 wt%) |
| Sodium Silicate Solution | ( 30.0 g, 30 wt%) |
| Dispersing Agent | (0.20 g, 0.2 wt%) |

### Examples 11 to 20

Samples of aluminium, prepared as described in Example 1, Step 1, were coated at various coating weights, with the formulations of either Example 1, Step 2 or Example 10, dried and then tested using an acetic acid salt spray test described in BSI 7479:1991 (ISO 9227:1990) to assess the performance of the coatings. The conditions under which the test was undertaken were 35°C ± 1°C; 5% ± 0.5% salt; pH 3.1 to 3.3; test time 144 hours. The samples were visually assessed after the test. Results are provided in Table 1. The coating weights of 6 gsm and 15 gsm were applied as a single coat using a Meyer bar; coating weights of 12 gsm, 30 gsm, 45 gsm and 65 gsm were applied as two coats.

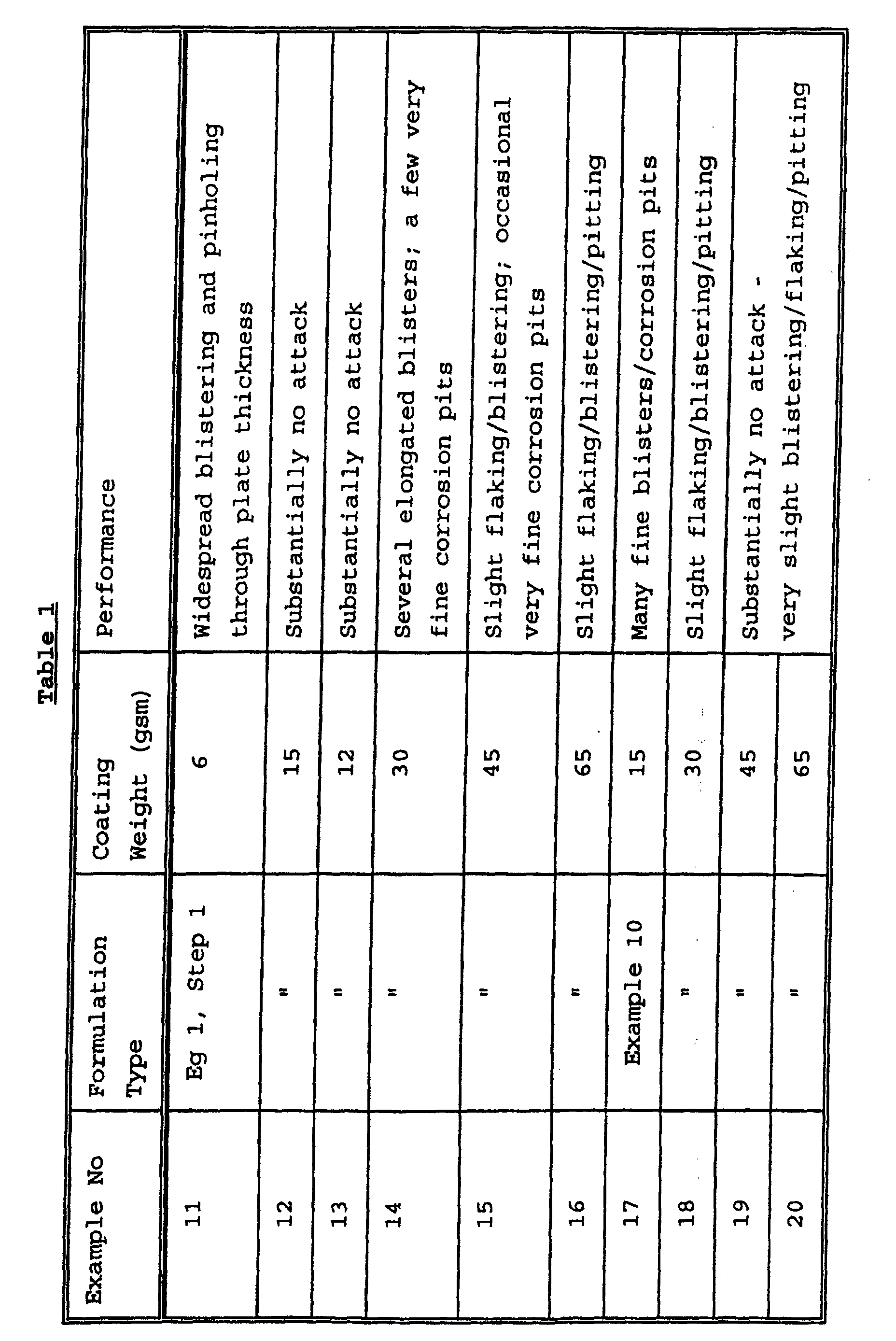

### Comparative Examples

### Example C1 - Chromated Sample

0.076 mm 3003 Aluminium foil was conversion coated using a solution of Alocrom 1290, supplied by Henkel Surface Technologies to give a chromium coat weight of 2.0-1.9 mg/dm². The sample was tested as described with reference to Examples 11 to 20. The result is in Table 2.

### Example C2

A sample of 1050 Aluminium was degreased by immersion in a solution of sodium hydroxide (10g/l) at 30°C for 2 minutes, followed by a desmutting treatment in sulphuric acid (170 g/l) at 20°C for 15 seconds. The sample was then anodized in a solution of sulphuric acid (270 g/l) at 30°C, 650 Amps/m², 16 volts for 10 minutes, with mechanical agitation. The sample was sealed by immersion in deionized water at 95 - 100°C for 10 minutes, followed by rinsing in tap water, then deionized water before drying in warm air at about 50°C. The sample was tested as described with reference to Examples 11 to 20. The result is in Table 2.

| Example No | Coating Type | Performance |
|---|---|---|
| C1 | Chromate | Widespread fine pits and obtaining |
| C2 | architectural anodising (unsealed) | General slight white stain; a few very small pits |

### Comments

Each of the samples of Examples 11 to 20 gave some protection to the aluminium. The protection is best for Examples 12, 13, 19 and 20. It will be appreciated that for both formulations, the coating weight can be adjusted to optimise the protection.

Each of examples 12, 13, 19 and 20 gave better protection than Examples C1 and C2, both of which are representative of currently-used passivating processes.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

The invention is not restricted to the details of the foregoing embodiment(s).

## Claims

1. A method of passivating (or preventing the corrosion of) a non-lithographic metallic member, the method comprising contacting a said member with a liquid comprising a silicate solution and particulate material dispersed therein to form a first layer over said member, wherein:
said silicate solution comprises alkali metal silicate wherein the ratio of the number of moles of SiO₂ to the number of moles of M₂O in said alkali metal silicate, where M represents an alkali metal, is at least 2.5;
the ratio of the weight of SiO₂ solids to the weight of particulate material in said liquid is in the range 0.18 to 0.42;
said liquid includes 5 to 40 wt% of a first particulate material, wherein said first material is not silica or a derivative thereof;
said liquid includes 5 to 40 wt% of a second particulate material;
wherein one of said first or second particulate materials has a mean particle size in the range 0.1 to 20 µm. and the other one of either said first or second particulate materials has a mean particle size in the range 0.001 to 5 µm; and
wherein the Ra of the first layer is in the range 0.1 to 3 µm.

2. A method according to claim 1, wherein the ratio of the number of moles of SiO₂ to the number of moles of M₂O in said silicate, wherein M represents an alkali metal, is less than 4.

3. A method according to claim 1 or claim 2, wherein said liquid comprises sodium silicate as the only silicate in solution.

4. A method according to any preceding claim, wherein said liquid used to contact said member comprises 8 to 16 wt% of metal or non-metal silicate solids.

5. A method according to any preceding claim, wherein said liquid used to contact said member includes 15 to 45 wt% of particulate material.

6. A method according to any preceding claim, wherein said liquid used to contact said member includes 20 to 40 wt% of particulate material.

7. A method according to any preceding claim, wherein the ratio of the weight of SiO₂ solids to the weight of particulate material in said liquid is in the range 0.28 to 0.32.

8. A method according to any preceding claim, wherein said liquid includes more than 40 wt% water.

9. A method according to any preceding claim, wherein said first particulate material has a hardness of greater than 8 Modified Mohs.

10. A method according to any preceding claim, wherein said first material has a mean particle size of at least 0.1 µm and less than 20 µm.

11. A method according to any preceding claim, wherein said first material has a means particle size of at least 0.5 µm and less than 10 µm.

12. A method according to any preceding claim, wherein said first material is an inorganic material.

13. A method according to any preceding claim, wherein said first material is Al₂O₃.

14. A method according to any preceding claim, wherein the ratio of the weight of said first material to the weight of SiO₂ solids is at least 0.4.

15. A method according to any preceding claim, wherein said particulate material in said liquid includes at least 20 wt% of said first material.

16. A method according to any preceding claim, wherein said particulate material in said liquid includes at least 40 wt% of said first material.

17. A method according to any preceding claim, wherein said first material does not chemically react with said liquid or another component in said liquid.

18. A method according to any preceding claim, wherein said particulate material in said liquid includes at least 20 wt% of said second particulate material which is inorganic.

19. A method according to any preceding claim, wherein said second material does not chemically react with said liquid or another component in said liquid.

20. A method according to any preceding claim, wherein said particulate materials provided in said liquid define a multimodal particle size distribution.

21. A method according to any preceding claim, wherein each particulate material provided in said liquid is chemically inert under the conditions at which it is used in said method.

22. A method according to any preceding claim, wherein said particulate material includes material having angular and/or jagged edges.

23. A method according to any preceding claim, wherein the pH of said liquid is greater than 9.0.

24. A method according to any preceding claim, wherein said liquid includes less than 1 wt% of a protic acid.

25. A method according to any preceding claim, wherein said liquid has a viscosity of less than 100 mPas (centipoise).

26. A method according to any preceding claim, wherein the ratio of the total wt% of solid material to the wt% of solvent in said liquid is at least 0.5 and is less than 1.5.

27. A method according to any preceding claim, wherein the total wt% of solid material in said liquid is at least 30 wt% and is less than 65 wt%.

28. A method according to any preceding claim, wherein said liquid is applied to a said member to form a first layer having an average thickness after drying of less than 50 µm and greater than 2 µm.

29. A method according to any preceding claim, wherein the entire passivation of said member is carried out at a temperature of less than 150°C.

30. A non-lithographic metallic member preparable by a method according to any of claims 1 to 29.

31. The use of a liquid comprising a silicate solution and particulate material dispersed therein in the preparation of a passivating (or corrosion preventing) first layer on a surface of a non-lithographic metallic member, wherein:
said silicate solution comprises alkali metal silicate wherein the ratio of the number of moles of SiO₂ to the number of moles of M₂O in said alkali metal silicate, where M represents an alkali metal, is at least 2.5;
the ratio of the weight of SiO₂ solids to the weight of particulate material in said liquid is in the range 0.18 to 0.42;
said liquid includes 5 to 40 wt% of a first particulate material, wherein said first material is not silica or a derivative thereof;
said liquid includes 5 to 40 wt% of a second particulate material;
wherein one of said first or second particulate materials has a mean particle size in the range 0.1 to 20 µm and the other one of either said first or second particulate materials has a mean particle size in the range 0.001 to 5 µm; and
wherein the Ra of the first layer is in the range 0.1 to 3 µm.

## Patentansprüche

1. Verfahren zur Passivierung (oder Verhinderung der Korrosion) eines nichtlithographischen Metallteils, wobei das Verfahren das Kontaktieren des Teils mit einer Flüssigkeit umfasst, welche eine Silikatlösung und ein darin dispergiertes, teilchenförmiges Material umfasst, um eine erste Schicht auf dem Teil zu bilden, wobei:
die Silikatlösung ein Alkalimetallsilikat umfasst, wobei das Verhältnis der Molzahl an SiO₂ zu der Molzahl an M₂O in dem Alkalimetallsilikat mindestens 2,5 beträgt, wobei M ein Alkalimetall bedeutet;
das Verhältnis des Gewichts an festem SiO₂ zu dem Gewicht des teilchenförmigen Materials in der Flüssigkeit im Bereich von 0,18 bis 0,42 liegt;
die Flüssigkeit 5 bis 40 Gew% eines ersten teilchenförmigen Materials enthält, wobei das erste Material nicht Siliziumdioxid oder ein Derivat davon ist;
die Flüssigkeit 5 bis 40 Gew% eines zweiten teilchenförmigen Materials enthält;
wobei eines von dem ersten oder zweiten teilchenförmigen Material eine mittlere Teilchengröße im Bereich von 0,1 bis 20 µm aufweist, und das andere von entweder dem ersten oder zweiten teilchenförmigen Material eine mittlere Teilchengröße im Bereich von 0,001 bis 5 µm aufweist; und
wobei der Ra-Wert der ersten Schicht im Bereich von 0,1 bis 3 µm liegt.

2. Verfahren gemäß Anspruch 1, wobei das Verhältnis der Molzahl an SiO₂ zu der Molzahl an M₂O in dem Silikat weniger als 4 beträgt, wobei M ein Alkalimetall bedeutet.

3. Verfahren gemäß Anspruch 1 oder Anspruch 2, wobei die Flüssigkeit Natriumsilikat als einziges Silikat in der Lösung umfasst.

4. Verfahren gemäß einem vorstehenden Anspruch, wobei die zum Kontaktieren des Teils verwendete Flüssigkeit 8 bis 16 Gew% an metallischen oder nichtmetallischen Silikatfeststoffen umfasst.

5. Verfahren gemäß einem vorstehenden Anspruch, wobei die zum Kontaktieren des Teils verwendete Flüssigkeit 15 bis 45 Gew% teilchenförmiges Material enthält.

6. Verfahren gemäß einem vorstehenden Anspruch, wobei die zum Kontaktieren des Teils verwendete Flüssigkeit 20 bis 40 Gew% teilchenförmiges Material enthält.

7. Verfahren gemäß einem vorstehenden Anspruch, wobei das Verhältnis des Gewichts an festem SiO₂ zu dem Gewicht des teilchenförmigen Materials in der Flüssigkeit im Bereich von 0,28 bis 0,32 liegt.

8. Verfahren gemäß einem vorstehenden Anspruch, wobei die Flüssigkeit mehr als 40 Gew% Wasser enthält.

9. Verfahren gemäß einem vorstehenden Anspruch, wobei das erste teilchenförmige Material eine modifizierte Mohssche Härte von mehr als 8 aufweist.

10. Verfahren gemäß einem vorstehenden Anspruch, wobei das erste Material eine mittlere Teilchengröße von mindestens 0,1 µm und weniger als 20 µm aufweist.

11. Verfahren gemäß einem vorstehenden Anspruch, wobei das erste Material eine mittlere Teilchengröße von mindestens 0,5 µm und weniger als 10 µm aufweist.

12. Verfahren gemäß einem vorstehenden Anspruch, wobei das erste Material ein anorganisches Material ist.

13. Verfahren gemäß einem vorstehenden Anspruch, wobei das erste Material Al₂O₃ ist.

14. Verfahren gemäß einem vorstehenden Anspruch, wobei das Verhältnis des Gewichts des ersten Materials zu dem Gewicht an festem SiO₂ mindestens 0,4 beträgt.

15. Verfahren gemäß einem vorstehenden Anspruch, wobei das teilchenförmige Material in der Flüssigkeit mindestens 20 Gew% des ersten Materials enthält.

16. Verfahren gemäß einem vorstehenden Anspruch, wobei das teilchenförmige Material in der Flüssigkeit mindestens 40 Gew% des ersten Materials enthält.

17. Verfahren gemäß einem vorstehenden Anspruch, wobei das erste Material mit der Flüssigkeit oder einem anderen Bestandteil in der Flüssigkeit chemisch nicht reagiert.

18. Verfahren gemäß einem vorstehenden Anspruch, wobei das teilchenförmige Material in der Flüssigkeit mindestens 20 Gew% des zweiten teilchenförmigen Materials, welches anorganisch ist, enthält.

19. Verfahren gemäß einem vorstehenden Anspruch, wobei das zweite Material mit der Flüssigkeit oder einem anderen Bestandteil in der Flüssigkeit chemisch nicht reagiert.

20. Verfahren gemäß einem vorstehenden Anspruch, wobei die in der Flüssigkeit bereitgestellten teilchenförmigen Materialien eine multimodale Teilchengrößenverteilung definieren.

21. Verfahren gemäß einem vorstehenden Anspruch, wobei jedes in der Flüssigkeit bereitgestellte teilchenförmige Material unter den Bedingungen unter denen es im Verfahren verwendet wird chemisch inert ist.

22. Verfahren gemäß einem vorstehenden Anspruch, wobei das teilchenförmige Material ein Material mit eckigen und/oder ungleichmäßige Kanten enthält.

23. Verfahren gemäß einem vorstehenden Anspruch, wobei der pH-Wert der Flüssigkeit größer als 9,0 ist.

24. Verfahren gemäß einem vorstehenden Anspruch, wobei die Flüssigkeit weniger als 1 Gew% einer protischen Säure enthält.

25. Verfahren gemäß einem vorstehenden Anspruch, wobei die Flüssigkeit eine Viskosität von weniger als 100 mPas (Centipoise) aufweist.

26. Verfahren gemäß einem vorstehenden Anspruch, wobei das Verhältnis an Gesamtgew% des festen Materials zu den Gew% an Lösungsmittel in der Flüssigkeit mindestens 0,5 und weniger als 1,5 beträgt.

27. Verfahren gemäß einem vorstehenden Anspruch, wobei das Gesamtgew% des festen Materials in der Flüssigkeit mindestens 30 Gew% und weniger als 65 Gew% beträgt.

28. Verfahren gemäß einem vorstehenden Anspruch, wobei die Flüssigkeit auf das Teil aufgebracht wird, um eine erste Schicht mit einer mittleren Dicke nach dem Trocknen von weniger als 50 µm und mehr als 2 µm zu bilden.

29. Verfahren gemäß einem vorstehenden Anspruch, wobei die gesamte Passivierung des Teils bei einer Temperatur von weniger als 150 °C durchgeführt wird.

30. Nichtlithographisches Metallteil, herstellbar durch ein Verfahren nach einem der Ansprüche 1 bis 29.

31. Verwendung einer Flüssigkeit, welche eine Silikatlösung und ein darin dispergiertes, teilchenförmiges Material enthält, zur Herstellung einer passivierenden (oder korrosionsverhindemden) ersten Schicht auf einer Oberfläche eines nichtlithographischen Metallteils, wobei:
die Silikatlösung ein Alkalimetallsilikat umfasst, wobei das Verhältnis der Molzahl an SiO₂ zu der Molzahl an M₂O in dem Alkalimetallsilikat mindestens 2,5 beträgt, wobei M ein Alkalimetall bedeutet;
das Verhältnis des Gewichts an festem SiO₂ zu dem Gewicht des teilchenförmigen Materials in der Flüssigkeit im Bereich von 0,18 bis 0,42 liegt;
die Flüssigkeit 5 bis 40 Gew% eines ersten teilchenförmigen Materials enthält, wobei das erste Material nicht Siliziumdioxid oder ein Derivat davon ist;
die Flüssigkeit 5 bis 40 Gew% eines zweiten teilchenförmigen Materials enthält;
wobei eines von dem ersten oder zweiten teilchenförmigen Material eine mittlere Teilchengröße im Bereich von 0,1 bis 20 µm aufweist, und das andere von entweder dem ersten oder zweiten teilchenförmigen Material eine mittlere Teilchengröße im Bereich von 0,001 bis 5 µm aufweist; und
wobei der Ra-Wert der ersten Schicht im Bereich von 0,1 bis 3 µm liegt.

## Revendications

1. Procédé pour passiver un élément métallique non lithographique (ou empêcher sa corrosion), le procédé comprenant la mise en contact dudit élément avec un liquide comprenant une solution de silicate et un matériau particulaire dispersé dans cette solution pour former une première couche sur ledit élément, dans lequel :
ladite solution de silicate comprend un silicate de métal alcalin dans lequel le rapport du nombre de moles de SiO₂ au nombre de moles de M₂O, dans ledit silicate de métal alcalin, où M représente un métal alcalin, est d'au moins 2,5;
le rapport du poids de matières solides de SiO₂ au poids de matériau particulaire dans ledit liquide est dans la gamme de 0,18 à 0,42;
ledit liquide contient 5 à 40% en poids d'un premier matériau particulaire, ledit premier matériau n'étant pas de la silice ou un de ses dérivés;
ledit liquide contient 5 à 40% en poids d'un second matériau particulaire;
dans lequel un desdits matériaux particulaires, le premier ou le second, possède une granulométrie moyenne dans la gamme de 0,1 à 20 µm et l'autre matériau particulaire, le premier ou le second, possède une granulométrie moyenne dans la gamme de 0,001 à 5 µm; et
dans lequel la Ra de la première couche est dans la gamme de 0,1 à 3 µm.

2. Procédé selon la revendication 1, dans lequel le rapport du nombre de moles de SiO₂ au nombre de moles de M₂O dans ledit silicate, où M représente un métal alcalin, est inférieur à 4.

3. Procédé selon la revendication 1 ou la revendication 2, dans lequel ledit liquide comprend, comme seul silicate en solution, du silicate de sodium.

4. Procédé selon l'une quelconque des revendications précédentes, dans lequel ledit liquide employé pour entrer en contact avec ledit élément comprend 8 à 16% en poids de matières solides de silicate métallique ou non métallique.

5. Procédé selon l'une quelconque des revendications précédentes, dans lequel ledit liquide utilisé pour entrer en contact avec ledit élément comprend 15 à 45% en poids de matériau particulaire.

6. Procédé selon l'une quelconque des revendications précédentes, dans lequel ledit liquide utilisé pour entrer en contact avec ledit élément comprend 20 à 40% en poids de matériau particulaire.

7. Procédé selon l'une quelconque des revendications précédentes, dans lequel le rapport du poids de matières solides de SiO₂ au poids de matériau particulaire dans ledit liquide est dans la gamme de 0,28 à 0,32.

8. Procédé selon l'une quelconque des revendications précédentes, dans lequel ledit liquide contient plus de 40% en poids d'eau.

9. Procédé selon l'une quelconque des revendications précédentes, dans lequel ledit premier matériau particulaire possède une dureté supérieure à 8 Mohs modifiés.

10. Procédé selon l'une quelconque des revendications précédentes, dans lequel ledit premier matériau possède une granulométrie moyenne d'au moins 0,1 µm et de moins de 20 µm.

11. Procédé selon l'une quelconque des revendications précédentes, dans lequel ledit premier matériau possède une granulométrie moyenne d'au moins 0,5 µm et de moins de 10 µm.

12. Procédé selon l'une quelconque des revendications précédentes, dans lequel ledit premier matériau est un matériau minéral.

13. Procédé selon l'une quelconque des revendications précédentes, dans lequel ledit premier matériau est Al₂O₃.

14. Procédé selon l'une quelconque des revendications précédentes, dans lequel le rapport du poids dudit premier matériau au poids des matières solides de SiO₂ est d'au moins 0,4.

15. Procédé selon l'une quelconque des revendications précédentes, dans lequel ledit matériau particulaire dans ledit liquide contient au moins 20% en poids dudit premier matériau.

16. Procédé selon l'une quelconque des revendications précédentes, dans lequel ledit matériau particulaire dans ledit liquide contient au moins 40% en poids dudit premier matériau.

17. Procédé selon l'une quelconque des revendications précédentes, dans lequel ledit premier matériau ne réagit pas chimiquement avec ledit liquide ou un autre constituant dudit liquide.

18. Procédé selon l'une quelconque des revendications précédentes, dans lequel ledit matériau particulaire dans ledit liquide contient au moins 20% en poids dudit second matériau particulaire qui est minéral.

19. Procédé selon l'une quelconque des revendications précédentes, dans lequel ledit second matériau ne réagit pas chimiquement avec ledit liquide ou un autre constituant dudit liquide.

20. Procédé selon l'une quelconque des revendications précédentes, dans lequel lesdits matériaux particulaires incorporés dans ledit liquide définissent une distribution granulométrique multimodale.

21. Procédé selon l'une quelconque des revendications précédentes, dans lequel chaque matériau particulaire incorporé dans ledit liquide est inerte chimiquement dans les conditions dans lesquelles on emploie ledit procédé.

22. Procédé selon l'une quelconque des revendications précédentes, dans lequel ledit matériau particulaire contient un matériau ayant des arêtes angulaires et/ou dentelées.

23. Procédé selon l'une quelconque des revendications précédentes, dans lequel le pH dudit liquide est supérieur à 9,0.

24. Procédé selon l'une quelconque des revendications précédentes, dans lequel ledit liquide contient moins de 1 % en poids d'un acide protique.

25. Procédé selon l'une quelconque des revendications précédentes, dans lequel ledit liquide a une viscosité inférieure à 100 mPa.s (centipoises).

26. Procédé selon l'une quelconque des revendications précédentes, dans lequel le rapport du pourcentage en poids total du matériau solide au pourcentage en poids du solvant dans ledit liquide est d'au moins 0,5 et est inférieur à 1,5.

27. Procédé selon l'une quelconque des revendications précédentes, dans lequel le pourcentage en poids total du matériau solide dans ledit liquide est d'au moins 30% en poids et est inférieur à 65% en poids.

28. Procédé selon l'une quelconque des revendications précédentes, dans lequel ledit liquide est appliqué sur ledit élément pour former une première couche ayant une épaisseur moyenne, après séchage, inférieure à 50 µm et supérieure à 2 µm.

29. Procédé selon l'une quelconque des revendications précédentes, dans lequel la passivation tout entière dudit élément est réalisée à une température inférieure à 150°C.

30. Elément métallique non lithographique pouvant être préparé par le procédé selon l'une quelconque des revendications 1 à 29.

31. Utilisation d'un liquide comprenant une solution de silicate et un matériau particulaire dispersé dans la solution, dans la préparation d'une première couche de passivation (ou empêchant la corrosion) sur une surface d'un élément métallique non lithographique, dans laquelle:
ladite solution de silicate comprend un silicate de métal alcalin dans lequel le rapport du nombre de moles de SiO₂ au nombre de moles de M₂O, dans ledit silicate de métal alcalin, où M représente un métal alcalin, est d'au moins 2,5;
le rapport du poids de matières solides de SiO₂ au poids de matériau particulaire dans ledit liquide est dans la gamme de 0,18 à 0,42;
ledit liquide contient 5 à 40% en poids d'un premier matériau particulaire, ledit premier matériau n'étant pas de la silice ou un de ses dérivés;
ledit liquide contient 5 à 40% en poids d'un second matériau particulaire;
dans laquelle un desdits matériaux particulaires, le premier ou le second, possède une granulométrie moyenne dans la gamme de 0,1 à 20 µm et l'autre matériau particulaire, le premier ou le second, possède une granulométrie moyenne dans la gamme de 0,001 à 5 µm; et
dans laquelle la Ra de la première couche est dans la gamme de 0,1 à 3 µm.
